# EUROPÄISCHE PATENTSCHRIFT

(11) **EP 2 615 314 B1**
(45) Veröffentlichungstag und Bekanntmachung des Hinweises auf die Patenterteilung: **25.02.2015**
(21) Anmeldenummer: 12196792.1
(22) Anmeldetag: 12.12.2012
(51) Int. Cl.: F16B 33/06, F16B 35/06

(54) **Schraube mit einer Kopfauflagefläche mit Schmiermitteltaschen**
Screw having an underhead bearing surface including lubricant pockets
Vis avec une surface d'appui de la tête dotée de poches de lubrifiant

(30) Priorität: 12.01.2012 DE 102012100228
(43) Veröffentlichungstag der Anmeldung: 17.07.2013
(73) Patentinhaber: KAMAX Holding GmbH & Co. KG, 35315 Homberg (Ohm) (DE)
(72) Erfinder: Grobecker, Markus, 37434 Gieboldehausen (DE); Bietz, Norbert, 35466 Rabenau-Londorf (DE); Hartmann, Gunther, 36304 Alsfeld (DE)
(74) Vertreter: REHBERG HÜPPE + PARTNER

(56) Entgegenhaltungen:
- EP-A1- 2 412 992
- EP-A2- 1 281 875
- DE-A1- 3 641 836
- DE-A1- 10 001 857
- US-A- 2 353 531

## Beschreibung

### TECHNISCHES GEBIET DER ERFINDUNG

Die Erfindung betrifft eine Schraube mit einem Kopf mit einer Kopfauflagefläche, bei der mindestens in einem Teil der Kopfauflagefläche Schmiermitteltaschen angeordnet sind.

### STAND DER TECHNIK

Aus dem Stand der Technik, z. B. der deutschen Patentanmeldung DE 10 2008 041 391 A1, sind allgemein Schrauben mit einem Kopf mit einer Kopfauflagefläche bekannt.

Es ist ferner bekannt, dass solche Schrauben zur Erzielung einer definierten Reibung zwischen Kopfauflagefläche und dem zu verschraubenden Bauteil mit Beschichtungen versehen sind. Häufig werden diese Beschichtungen darüber hinaus zur Verbesserung des Korrosionsschutzes verwendet.

Werden derartige Schrauben mehrfach angezogen, d.h. nach dem Anziehen gelöst und erneut angezogen, kommt es häufig zu unerwünschten Fresserscheinungen. Die aufgebrachte Beschichtung wird abgerieben und es tritt ein metallischer Kontakt zwischen der Kopfauflagefläche der Schraube und dem zu verschraubenden Bauteil auf. Dadurch erhöht sich die Reibung in der Kontaktfläche deutlich und unkontrollierbar. Durch die sehr hohe Streuung der Reibung ist dann eine sichere Wiederholverschraubung nicht mehr möglich.

Man beobachtet dieses unerwünschte Phänomen insbesondere bei Beschichtungen mit relativ geringer Haftung zwischen der Beschichtung und dem Grundmetall der Schraube, wie z. B. bei organischen Beschichtungen etwa auf der Basis von Wachsen, Polymeren etc.

Aus der deutschen Patentanmeldung DE 100 01 857 A1 ist eine Schraube mit einem Kopf mit einer Kopfauflagefläche bekannt. In der Kopfauflagefläche sind mehrere konzentrische Nuten angeordnet. Zwischen den Nuten erstreckt sich ein konzentrischer Vorsprung, auf den ein Schmiermittel aufgebracht wird.

Eine weitere Schraube mit einem Kopf mit einer Kopfauflagefläche, ist aus der europäischen Patentanmeldung EP 2 412 992 A1 bekannt.

### AUFGABE DER ERFINDUNG

Der Erfindung liegt die Aufgabe zugrunde, eine Schraube zur Herstellung einer Schraubverbindung bereitzustellen, die gut für einen Mehrfachanzug der Schraubverbindung geeignet ist.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Schraube mit einem Kopf mit einer Kopfauflagefläche, bei der mindestens in einem Teil der Kopfauflagefläche Schmiermitteltaschen angeordnet sind.

Die Erfindung betrifft auch eine Scheibe für eine Kombination mit einer Schraube mit einem Kopf mit einer Kopfauflagefläche, wobei mindestens in einem Teil der der Kopfauflagefläche zugewandten ersten Oberfläche der Scheibe Schmiermitteltaschen angeordnet sind.

Die Erfindung betrifft weiterhin eine Schraubverbindung mit einem Bauteil, einer Schraube und einer Scheibe, wobei mindestens in einem Teil der Kopfauflagefläche der Schraube und/oder mindestens in einem Teil der ersten Oberfläche der Scheibe Schmiermitteltaschen angeordnet sind.

Die Erfindung betrifft auch ein Verfahren zum Herstellen einer Schraube mit einem Kopf mit einer Kopfauflagefläche, wobei Schmiermitteltaschen mindestens in einem Teil der Kopfauflagefläche ausgebildet werden.

Mit der Erfindung wird eine neue Schraube sowie eine mit einer Schraube zu kombinierende Scheibe bereitgestellt, mit denen Schraubverbindungen verlässlich mehrfach angezogen werden, ohne dass unerwünschte Fresserscheinungen auftreten. Dies wird dadurch erreicht, dass die Kopfauflagefläche der Schraube und/oder die dieser zugewandte erste Oberfläche der Scheibe Vertiefungen zur Aufnahme von Schmiermittel besitzt. Diese Vertiefungen werden in dieser Anmeldung als Schmiermitteltaschen bezeichnet. In diese Schmiermitteltaschen wird Schmiermittel eingebracht, welches dann beim Anziehen der Schraubverbindung und der daraus resultierenden Verformung der Kopfauflagefläche der Schraube sukzessiv freigegeben wird. Dies bewirkt eine Reduzierung und Vergleichmäßigung der Reibkräfte zwischen der Kopfauflagefläche und der mit dieser in Kontakt tretenden Oberfläche.

Die Erfindung stellt also eine bewusste Abkehr von dem Ziel einer möglichst glatten Oberfläche der Kopfauflagefläche der Schraube dar und sieht stattdessen dort bewusst Vertiefungen vor, die zur Aufnahme von Schmiermittel dienen. Diese Schmiermittelaufnahmevertiefungen oder Schmiermitteltaschen bilden ein Schmiermittelreservoir unter dem Schraubenkopf, welches beim Anziehen der Schraubverbindung genutzt wird. Fressen beginnt während des Anziehens einer Schraubverbindung häufig erst bei höheren Vorspannkräften, also eher erst in der zweiten Hälfte bzw. dem zweiten Drittel des Anziehvorgangs. Die neuen Schmiermitteltaschen setzen nun Schmiermittel besonders in diesem relevanten Teil des Anziehvorgangs frei, da die Verformung der Kopfauflagefläche zu einem Herauspressen des Schmiermittels aus den Vertiefungen führt. Somit steht stets frisches, unverbrauchtes Schmiermittel in jeder Phase des Verschraubungsvorgangs zur Verfügung und Fressen wird zuverlässig verhindert bzw. zumindest reduziert.

Die neuen Schmiermitteltaschen bieten sich auch bei der Herstellung von Schraubverbindungen mit einem oder mehreren Bauteilen aus Aluminium an. Bei derartigen Schraubverbindungen, bei denen das Bauteil aus einem weicheren Material als die Schraube besteht, treten im Stand der Technik häufig Fresserscheinungen auf. Diese werden nun durch die neuen Schmiermitteltaschen verhindert bzw. zumindest wesentlich reduziert.

Ein weiterer Vorteil besteht darin, dass die Schmiermitteltaschen auch Verschleißpartikel aufnehmen können und auch in dieser Weise Fresserscheinungen minimiert werden.

Es ist dabei bevorzugt, dass die Schmiermitteltaschen im Querschnitt randgeschlossen ausgebildet sind. Durch diese Ausbildung wird das Schmiermittel zuverlässig in den Taschen gehalten und erst dann freigesetzt, wenn eine entsprechende elastische oder elastisch-plastische Verformung der Kopfauflagefläche während des Anziehvorgangs erfolgt ist. Es versteht sich dabei, dass ein Teil oder alle Schmiermitteltaschen im Querschnitt randgeschlossen ausgebildet sein können, wobei es in Abhängigkeit von dem Herstellverfahren der Schmiermitteltaschen vergleichsweise wahrscheinlich ist, dass die radial außenliegenden Schmiermitteltaschen - d. h. die Schmiermitteltaschen an der Außenkante der Kopfauflagefläche - nicht geschlossen ausgebildet sind.

Die Schmiermitteltaschen weisen insbesondere einen gemittelten Durchmesser auf, der maximal etwa 20 % der radialen Breite der Kopfauflagefläche entspricht. Es handelt sich also insbesondere um keine in Umfangsrichtung durchgehenden Gebilde in der Form von Nuten, Kanälen oder dergleichen, sondern um deutlich kleinere Einheiten.

Die Schmiermitteltaschen sind unregelmäßig verteilt angeordnet und radial und in Umfangsrichtung der Kopfauflagefläche nicht durchgehend ausgebildet. Durch die verteilte Anordnung wird eine näherungsweise gleichmäßige Verteilung und Bereitstellung des Schmiermittels während des Anziehvorgangs erreicht.

Die Schmiermitteltaschen können einen gemittelten Durchmesser von zwischen etwa 50 bis 500 µm, insbesondere zwischen etwa 100 bis 300 µm, besitzen. Es handelt sich also dann um kleine Vertiefungen, die auch als gewisse Oberflächenrauheit angesehen werden können. In diesem Sinne kann die Kopfauflagefläche zur Bildung der Schmiermitteltaschen eine gemittelte Rautiefe R_{Z} von zwischen etwa 10 bis 100 µm, insbesondere zwischen etwa 15 bis 50 µm, besitzen. Die Oberflächenrauheit ist insbesondere so gewählt, dass eine gewisse Welligkeit vorhanden ist, ohne dass scharfe Spitzen existieren. Diese Spitzen sind vorzugsweise abgerundet.

Die Kopfauflagefläche kann erhabene Bereiche und die Schmiermitteltaschen bildende vertiefte Bereiche aufweisen, wobei die erhabenen Bereiche verrundet ausgebildet sind und insbesondere einen gemittelten Durchmesser von zwischen etwa 50 bis 500 µm, insbesondere zwischen etwa 100 bis 300 µm, besitzen.

Die Schmiermitteltaschen können im gesamten Bereich der Kopfauflagefläche oder nur in einem Teil der Kopfauflagefläche, insbesondere einem radial äußeren Teil, angeordnet sein. Fressen beginnt häufig zunächst in einem radial äußeren Bereich der Kopfauflagefläche, so dass die Anordnung von Schmiermitteltaschen in diesem Bereich besonders sinnvoll ist.

Die Schmiermitteltaschen können durch Kaltumformung hergestellt sein. Hierdurch lassen sich die Schmiermitteltaschen wirtschaftlich und zuverlässig automatisiert herstellen. Eine Möglichkeit ist z. B. die Herstellung mittels einer Matrize, wobei die Matrize eine Oberfläche besitzt, die komplementär zur Kopfauflagefläche der Schraube mit den Schmiermitteltaschen ist. Die Matrize prägt also mit ihren erhabenen Bereichen die die Schmiermitteltaschen bildenden Vertiefungen in die Kopfauflagefläche.

Es ist auch möglich, unterschiedliche Schmiermitteltaschen an einer Kopfauflagefläche anzubringen. So können z. B. die im radial inneren Bereich angeordneten Schmiermitteltaschen eine andere Geometrie und/oder Größe als die im radial äußeren Bereich angeordneten Schmiermitteltaschen besitzen.

Bei dem Schmiermittel kann es sich insbesondere um Trockenschmiermittel, Polymerschmiermittel, Wachse, Zinklamellenbeschichtungen oder Pasten handeln.

Die Schraube und/oder die Scheibe besteht vorzugsweise aus Metall. Die Schraube ist insbesondere als hochfeste Schraube ausgebildet und dient z. B. zur Herstellung von Schraubverbindungen an Kraftfahrzeugen. Unter hochfesten Schrauben werden insbesondere Schrauben der Festigkeitsklassen 8.8, 10.9 und 12.9 verstanden. Die Schraube kann aber auch ein durch Zwischenstufenvergüten erzeugtes Bainitgefüge aufweisen und dadurch eine noch höhere Bruchfestigkeit bei einer sehr hohen Duktilität besitzen. Solche Schrauben werden auch als ultrahochfeste Schrauben bezeichnet und können Zugfestigkeiten von 1400 MPa oder höher aufweisen. Die Schraube weist vorzugsweise mindestens ein metrisches Gewinde auf.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Kopfauflagefläche die Rede ist, ist dies so zu verstehen, dass genau eine Kopfauflagefläche, zwei Kopfauflageflächen oder mehr Kopfauflageflächen vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erstes Ausführungsbeispiel der neuen Schraubverbindung mit einer Schraube und einem Bauteil.
- **Fig. 2**: zeigt ein zweites Ausführungsbeispiel der neuen Schraubverbindung mit einer Schraube, einer Scheibe und einem Bauteil.
- **Fig. 3**: zeigt ein Ausführungsbeispiel einer neuen Schraube.
- **Fig. 4**: zeigt ein erstes Ausführungsbeispiel der neuen Kopfauflagefläche der Schraube gemäß Linie A-A in Fig. 3.
- **Fig. 5**: zeigt ein zweites Ausführungsbeispiel der neuen Kopfauflagefläche der Schraube gemäß Linie A-A in Fig. 3.
- **Fig. 6**: zeigt ein drittes Ausführungsbeispiel der neuen Kopfauflagefläche der Schraube gemäß Linie A-A in Fig. 3.
- **Fig. 7**: zeigt ein viertes Ausführungsbeispiel der neuen Kopfauflagefläche der Schraube gemäß Linie A-A in Fig. 3.
- **Fig. 8**: zeigt ein weiteres Ausführungsbeispiel der neuen Schraubverbindung.
- **Fig. 9**: zeigt einen Ausschnitt eines weiteren Ausführungsbeispiels der neuen Schmiermitteltaschen.

### FIGURENBESCHREIBUNG

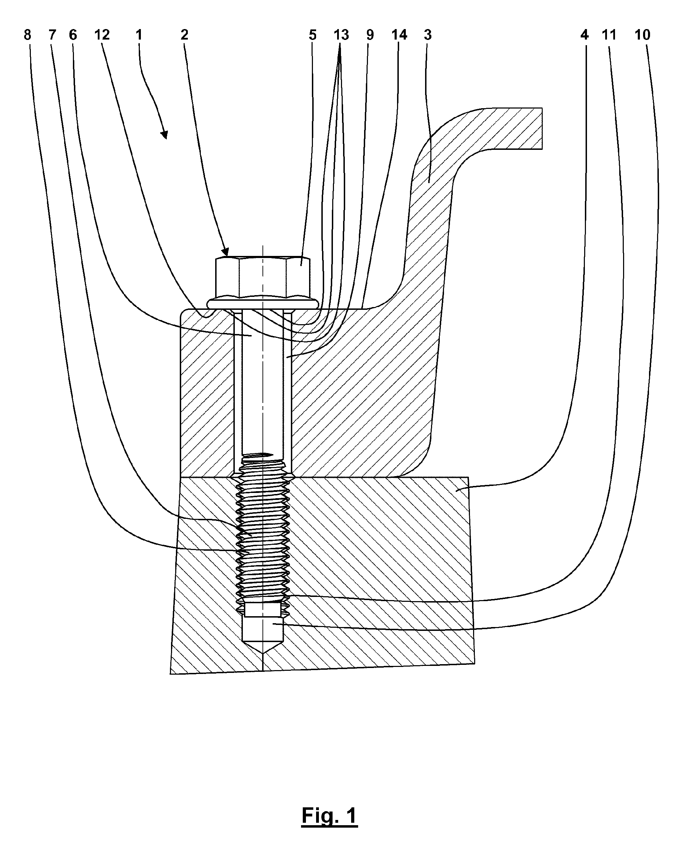

**Fig. 1** zeigt ein erstes Ausführungsbeispiel einer neuen Schraubverbindung 1 mit einer Schraube 2, insbesondere einer hochfesten Schraube, sowie einem ersten Bauteil 3 und einem zweiten Bauteil 4. Die Schraube 2 weist einen Kopf 5, einen Schaftabschnitt 6 und einen Gewindeabschnitt 7 mit einem Außengewinde 8 auf. Das erste Bauteil 3 weist eine Bohrung 9 und das zweite Bauteil 4 eine Bohrung 10 auf. Die Bohrung 10 weist ein zum Außengewinde 8 der Schraube 2 korrespondierendes Innengewinde 11 auf. Über die ineinander eingreifenden Gewinde 8, 11 und die Kopfauflagefläche 12 des Kopfes 5 der Schraube 2 wird die für die sichere Schraubverbindung 1 erforderliche Klemmkraft erzielt.

Im Bereich mindestens eines Teils der Kopfauflage 12 der Schraube 2 ist eine Mehrzahl von Schmiermitteltaschen 13 angeordnet. Die Schmiermitteltaschen 13 sind in Fig. 1 aufgrund ihrer geringen Größe nicht erkennbar und daher nur bezüglich ihrer grundsätzlichen Lage mit Bezugszeichen versehen.

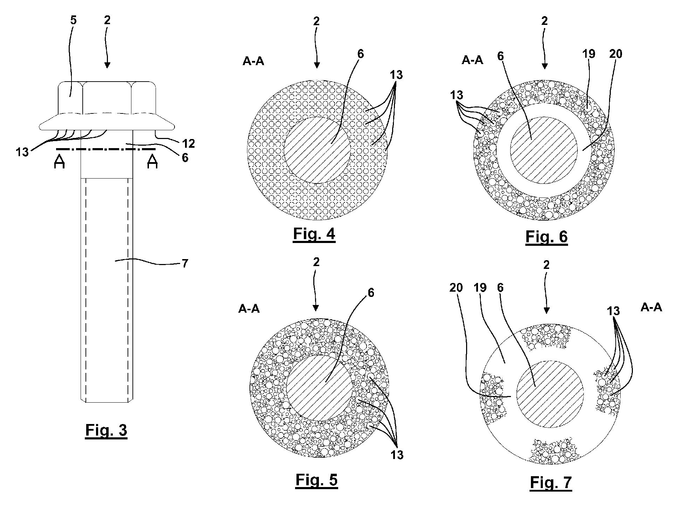

Die Schmiermitteltaschen 13 enthalten Schmiermittel (nicht dargestellt), welches beim Anziehen der Schraubverbindung 1 freigesetzt wird und zu einer Reduzierung der Reibkräfte führt. Im vorliegenden Fall befindet sich das Schmiermittel dann zwischen der Kopfauflagefläche 12 der Schraube 2 und einer dieser zugewandten Oberfläche 14 des Bauteils 3. Die Ausbildung der Schmiermitteltaschen 13 wird noch im weiteren Verlauf und insbesondere anhand der Fig. 4-7 und 9 erläutert.

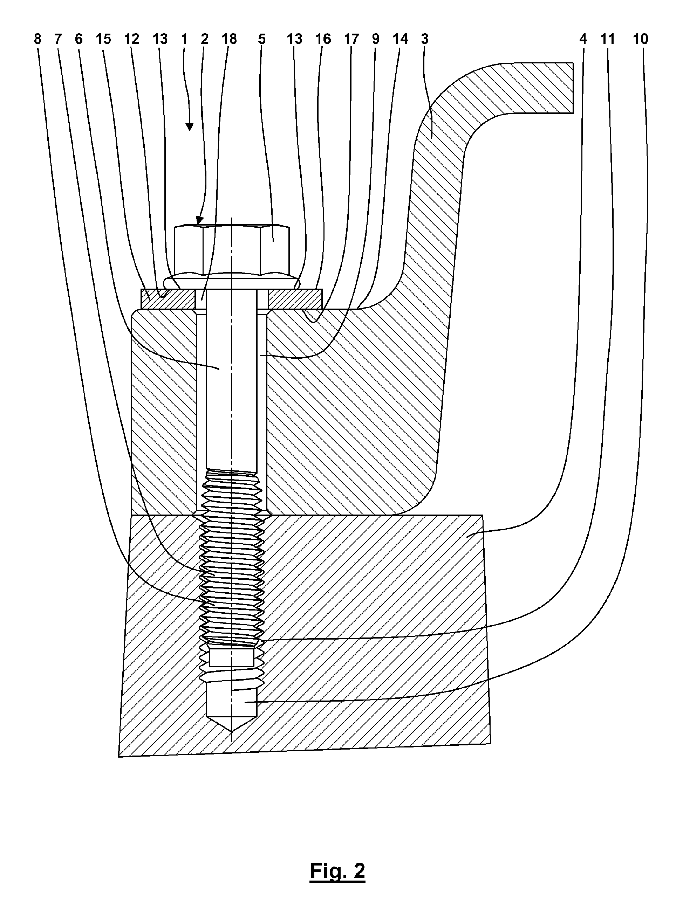

**Fig. 2** zeigt ein zweites Ausführungsbeispiel der neuen Schraubverbindung 1 mit der Schraube 2, einer Scheibe 15 und den Bauteilen 3, 4. Bezüglich der mit Ausnahme der Scheibe 15 übereinstimmenden Bauteile wird auf die oberhalb angegebene Beschreibung zu Fig. 1 Bezug genommen.

Die Scheibe 15 besitzt eine erste Oberfläche 16 und eine gegenüberliegende zweiten Oberfläche 17. Die Scheibe 15 weist eine Bohrung 18 auf, durch die sich der Schaftabschnitt 6 der Schraube 2 erstreckt.

Die Scheibe 15 weist im Bereich ihrer ersten Oberfläche 16 eine Vielzahl von Schmiermitteltaschen 13 auf, die mit der Kopfauflagefläche 12 des Kopfs 5 der Schraube 2 zum Verhindern von Fresserscheinungen während des Anziehens der Schraubverbindung 1 dienen. Weitere Schmiermitteltaschen 13 können im Bereich der zweiten Oberfläche 17 der Scheibe 15 angeordnet sein. Auch bei dieser Ausführungsform kann die Kopfauflagefläche 12 der Schraube 2 ebenfalls Schmiermitteltaschen 13 aufweisen.

In **Fig. 3** ist nun eine Schraube 2 dargestellt, um anhand eines Schnitts gemäß der Linie A-A verschiedene beispielhafte Ausbildungen und Geometrien der Schmiermitteltaschen 13 erläutern zu können.

Die **Fig. 4-7** zeigen also derartige verschiedene Ausbildungen und Geometrien der Schmiermitteltaschen 13 anhand eines Schnitts durch die Linie A-A in Fig. 3. Diese und andere Ausbildungen der Schmiermitteltaschen 13 können auch entsprechend bei der Scheibe 15 Anwendung finden, wobei es sich dann versteht, dass anstelle des in den Fig. 4-7 in der Mitte dargestellten Schaftabschnitts 6 dann die Bohrung 18 vorhanden ist.

In **Fig. 4** ist zunächst erkennbar, dass die Schmiermitteltaschen 13 im Querschnitt randgeschlossen ausgebildet sind. Dies trifft aber nicht notwendigerweise auf alle und insbesondere nicht auf solche Schmiermitteltaschen 13 zu, die unmittelbar im radialen äußeren Endbereich bzw. im radial inneren Endbereich der Kopfauflage 12 angeordnet sind. Die Schmiermitteltaschen 13 sind in diesem Fall regelmäßig verteilt angeordnet und radial und in Umfangsrichtung der Kopfauflagefläche 12 nicht durchgehend ausgebildet. Die Schmiermitteltaschen 13 weisen einen gemittelten Durchmesser auf, der maximal etwa 20 % der radialen Breite der Kopfauflagefläche 12 entspricht.

Bei der Ausführungsform der Schraube 2 gemäß **Fig. 5** weisen die Schmiermitteltaschen 13 unterschiedliche Größen bzw. Durchmesser auf. Die Schmiermitteltaschen 13 sind unregelmäßig über die gesamte Kopfauflagefläche 12 verteilt angeordnet.

**Fig. 6** zeigt eine weitere beispielhafte Ausbildung der Schmiermitteltaschen 13, wobei diese wiederum unterschiedliche Durchmesser besitzen. In diesem Fall sind die Schmiermitteltaschen 13 nur in einem Teil der Kopfauflagefläche 12 und hier einem radial äußeren Teil 19 angeordnet. In einem radial inneren Teil 20 der Kopfauflagefläche 12 sind hingegen keine Schmiermitteltaschen 13 vorhanden.

Bei der Ausführungsform der Schraube 2 gemäß **Fig. 7** weisen die Schmiermitteltaschen 13 wiederum unterschiedliche Durchmesser auf und sind in dem radial äußeren Teil 19, nicht aber in dem radial inneren Teil 20 der Kopfauflagefläche 12 angeordnet. Sie erstrecken sich aber auch nur über einen Teil des radial äußeren Teils 19 in Umfangsrichtung.

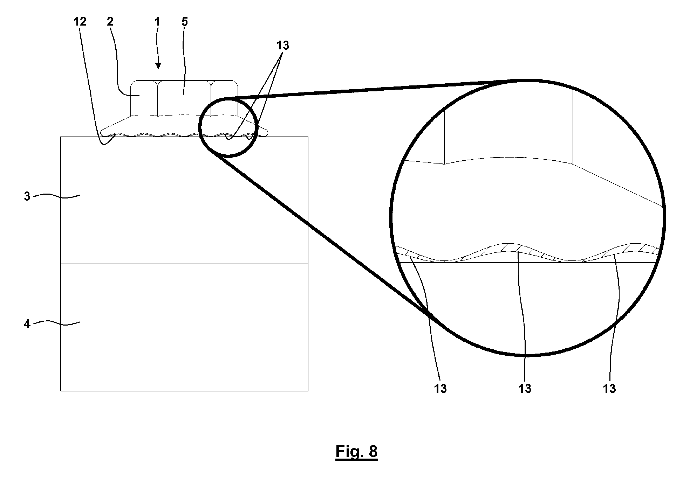

**Fig. 8** zeigt eine weitere Ansicht der neuen Schraubverbindung 1, wobei es sich hierbei um keine Schnittansicht handelt. In dieser Ansicht sind die Schmiermitteltaschen 13 schematisch dargestellt. Die Schmiermitteltaschen 13 sind übertrieben groß dargestellt, und sie sind weiterhin in der Realität nicht derart gleichmäßig über den Umfang der Kopfauflagefläche 12 in deren radial äußerem Teil 19 angeordnet. Diese Darstellung dient in erster Linie der Verdeutlichung des Prinzips, dass die Schmiermitteltaschen 13 Vertiefungen in der Kopfauflagefläche 12 darstellen, in denen Schmiermittel aufgenommen ist.

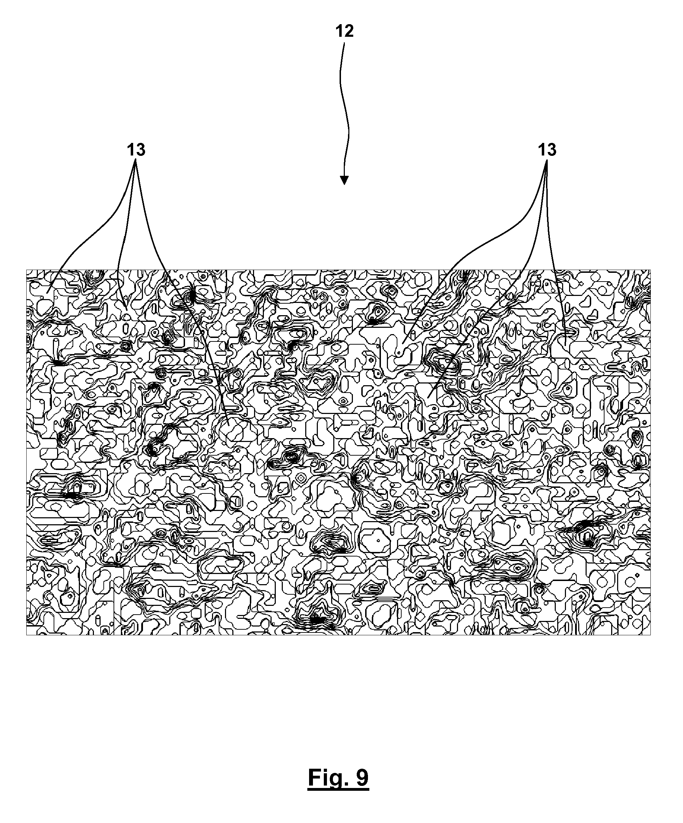

**Fig. 9** zeigt schließlich eine realistischere Darstellung eines Teils der Kopfauflagefläche 12 mit Schmiermitteltaschen 13. Es ist erkennbar, dass die Schmiermitteltaschen 13 bei dieser Ausführungsform tatsächlich unregelmäßig über die Kopfauflagefläche 12 verteilt angeordnet sind und unterschiedliche Durchmesser und Geometrien besitzen. Eine solche Geometrie kann durch Kaltumformung und insbesondere mittels einer Matrize hergestellt werden.

### BEZUGSZEICHENLISTE

- 1: Schraubverbindung
- 2: Schraube
- 3: Bauteil
- 4: Bauteil
- 5: Kopf
- 6: Schaftabschnitt
- 7: Gewindeabschnitt
- 8: Außengewinde
- 9: Bohrung
- 10: Bohrung
- 11: Innengewinde
- 12: Kopfauflagefläche
- 13: Schmiermitteltasche
- 14: Oberfläche
- 15: Scheibe
- 16: erste Oberfläche
- 17: zweite Oberfläche
- 18: Bohrung
- 19: radial äußerer Teil
- 20: radial innerer Teil

## Patentansprüche

1. Schraube (2) mit einem Kopf (5) mit einer Kopfauflagefläche (12), **dadurch gekennzeichnet, dass** mindestens in einem Teil der Kopfauflagefläche (12) Schmiermitteltaschen (13) unregelmäßig verteilt angeordnet und in Umfangsrichtung der Kopfauflagefläche (12) nicht durchgehend ausgebildet sind, in die Schmiermittel eingebracht ist.

2. Schraube (2) nach Anspruch 1, **dadurch gekennzeichnet, dass** die Schmiermitteltaschen (13) im Querschnitt randgeschlossen ausgebildet sind.

3. Schraube (2) nach mindestens einem der vorhergehenden Ansprüche, **dadurch gekennzeichnet, dass** die Schmiermitteltaschen (13) einen gemittelten Durchmesser besitzen, der maximal etwa 20 % der radialen Breite der Kopfauflagefläche (12) entspricht.

4. Schraube (2) nach mindestens einem der vorhergehenden Ansprüche, **dadurch gekennzeichnet, dass** die Schmiermitteltaschen (13) einen gemittelten Durchmesser von zwischen etwa 50 bis 500 µm, insbesondere zwischen etwa 100 bis 300 µm, besitzen.

5. Schraube (2) nach mindestens einem der vorhergehenden Ansprüche, **dadurch gekennzeichnet, dass** die Kopfauflagefläche (12) zur Bildung der Schmiermitteltaschen (13) eine gemittelte Rautiefe R_{Z} von zwischen etwa 10 bis 100 µm, insbesondere zwischen etwa 15 bis 50 µm, besitzt.

6. Schraube (2) nach mindestens einem der vorhergehenden Ansprüche, **dadurch gekennzeichnet, dass** die Kopfauflagefläche (12) erhabene Bereiche und die Schmiermitteltaschen (13) bildende vertiefte Bereiche aufweist, wobei die erhabenen Bereiche verrundet ausgebildet sind und insbesondere einen gemittelten Durchmesser von zwischen etwa 50 bis 500 µm, insbesondere zwischen etwa 100 bis 300 µm, besitzen.

7. Schraube (2) nach mindestens einem der vorhergehenden Ansprüche, **dadurch gekennzeichnet, dass** die Schmiermitteltaschen (13) nur in einem Teil der Kopfauflagefläche (12), insbesondere einem radial äußeren Teil (19), angeordnet sind.

8. Schraube (2) nach mindestens einem der vorhergehenden Ansprüche, **dadurch gekennzeichnet, dass** die Schmiermitteltaschen (13) durch Kaltumformung hergestellt sind.

9. Scheibe (15) für eine Kombination mit einer Schraube (2) mit einem Kopf (5) mit einer Kopfauflagefläche (12), **dadurch gekennzeichnet, dass** mindestens in einem Teil der der Kopfauflagefläche (12) zugewandten ersten Oberfläche (16) der Scheibe (15) Schmiermitteltaschen (13) unregelmäßig verteilt angeordnet und in Umfangsrichtung der ersten Oberfläche (16) nicht durchgehend ausgebildet sind, in die Schmiermittel eingebracht ist.

10. Scheibe (15) nach Anspruch 9, **dadurch gekennzeichnet, dass** die Schmiermitteltaschen (13) so ausgebildet sind, wie dies in mindestens einem der vorhergehenden Ansprüche definiert ist, wobei die dort angegebene Kopfauflagefläche (12) der ersten Oberfläche (16) der Scheibe (15) entspricht.

11. Schraubverbindung (1), mit
einem Bauteil (3) mit einer Oberfläche (14) und einer Bohrung (9),
einer Schraube (2) mit einem Kopf (5) mit einer Kopfauflagefläche (12), wobei sich die Schraube (2) durch die Bohrung (9) des Bauteils (3) erstreckt,
einer Scheibe (15) mit einer ersten Oberfläche (16) und einer gegenüberliegenden zweiten Oberfläche (17), wobei die Scheibe (15) zwischen der Kopfauflagefläche (12) der Schraube (2) und der Oberfläche (14) des Bauteils (3) angeordnet ist, wobei die erste Oberfläche (16) der Scheibe (15) der Kopfauflagefläche (12) der Schraube (2) und die zweite Oberfläche (17) der Scheibe (15) der Oberfläche (14) des Bauteils (3) zugewandt angeordnet ist, **dadurch gekennzeichnet, dass**
mindestens in einem Teil der Kopfauflagefläche (12) der Schraube (2) und/oder mindestens in einem Teil der ersten Oberfläche (16) der Scheibe (15) Schmiermitteltaschen (13) unregelmäßig verteilt angeordnet und in Umfangsrichtung der Kopfauflagefläche (12) und/oder der ersten Oberfläche (16) nicht durchgehend ausgebildet sind, in die Schmiermittel eingebracht ist.

12. Verfahren zum Herstellen einer Schraube (2) mit einem Kopf (5) mit einer Kopfauflagefläche (12), insbesondere nach mindestens einem der Ansprüche 1 bis 8, mit dem Schritt:
Ausbilden von Schmiermitteltaschen (13), in die Schmiermittel eingebracht wird, mindestens in einem Teil der Kopfauflagefläche (12) der Schraube (2) derart, dass die Schmiermitteltaschen (13) in der Kopfauflagefläche (12) unregelmäßig verteilt angeordnet und in Umfangsrichtung der Kopfauflagefläche (12) nicht durchgehend ausgebildet sind.

13. Verfahren nach Anspruch 12, **dadurch gekennzeichnet, dass** die Schmiermitteltaschen (13) durch Kaltumformung hergestellt werden.

14. Verfahren nach Anspruch 13, **dadurch gekennzeichnet, dass** die Schmiermitteltaschen (13) mittels einer Matrize hergestellt werden, wobei die Matrize eine Oberfläche besitzt, die komplementär zur Kopfauflagefläche (12) der Schraube (2) mit den Schmiermitteltaschen (13) ist.

## Claims

1. A screw (2) including a head (5) having an underhead bearing surface (12), **characterised in that** lubricant pockets (13) into which lubricant is introduced are arranged in at least a part of the underhead bearing surface (12) in an irregularly distributed way, the lubricant pockets (13) being designed not to be continuous in the circumferential direction of the underhead bearing surface (12).

2. The screw (2) of claim 1, **characterised in that** the lubricant pockets (13) are designed to be circumferentially closed in cross-section.

3. The screw (2) of at least one of the preceding claims, **characterised in that** the lubricant pockets (13) have an average diameter corresponding to maximally approximately 20 % of the radial width of the underhead bearing surface (12).

4. The screw (2) of at least one of the preceding claims, **characterised in that** the lubricant pockets (13) have an average diameter of between approximately 50 to 500 µm, especially between approximately 100 to 300 µm.

5. The screw (2) of at least one of the preceding claims, **characterised in that** the underhead bearing surface (12) for forming the lubricant pockets (13) has an average surface roughness Rz of between approximately 10 to 100 µm, especially between approximately 15 to 50 µm.

6. The screw (2) of at least one of the preceding claims, **characterised in that** the underhead bearing surface (12) includes projecting portions and deepened portions, the deepened portions forming the lubricant pockets (13), the projecting portions being designed to be rounded and especially to have an average diameter of between approximately 50 to 500 µm, especially between approximately 100 to 300 µm.

7. The screw (2) of at least one of the preceding claims, **characterised in that** the lubricant pockets (13) are only arranged in a part of the underhead bearing surface (12), especially a radial outer part (19).

8. The screw (2) of at least one of the preceding claims, **characterised in that** the lubricant pockets (13) are produced by cold forming.

9. A washer (15) for combination with a screw (2) including a head (5) heaving an underhead bearing surface (12), **characterised in that** lubricant pockets (13) into which lubricant is introduced are arranged in at least a part of the first surface (16) of the washer (15) facing the underhead bearing surface (12) in an irregularly distributed way and not to be continuous in the circumferential direction of the first surface (16).

10. The washer (15) of claim 9, **characterised in that** the lubricant pockets (13) are designed in a way as defined in at least one of the preceding claims, the underhead bearing surface (12) mentioned in these claims corresponding to the first surface (16) of the washer (15).

11. A screw joint (1), comprising:
a component (3) having a surface (14) and a bore (9),
a screw (2) including a head (5) having an underhead bearing surface (12), the screw (2) extending through the bore (9) of the component (3),
a washer (15) having a first surface (16) and an opposite second surface (17), the washer (15) being arranged between the underhead bearing surface (12) of the screw (2) and the surface (14) of the component (3), the first surface (16) of the washer (15) being arranged to face the underhead bearing surface (12) of the screw (2) and the second surface (17) of the washer (15) being arranged to face the surface (14) of the component (3), **characterised in that**
lubricant pockets (13) into which lubricant is introduced are arranged in at least a part of the underhead bearing surface (12) of the screw (2) and/or at least a part of the first surface (16) of the washer (15) in an irregularly distributed way and not to be continuous in the circumferential direction of the underhead bearing surface (12) and/or the first surface (16).

12. A method of producing a screw (2) including a head (5) having an underhead bearing surface (12), especially according to at least one of claims 1 to 8, comprising the steps of:
forming lubricant pockets (13) into which lubricant is introduced in at least a part of the underhead bearing surface (12) of the screw (2) such that the lubricant pockets (13) are arranged in the underhead bearing surface (12) in an irregularly distributed way and not to be continuous in the circumferential direction of the underhead bearing surface (12).

13. The method of claim 12, **characterised in that** the lubricant pockets (13) are produced by cold forming.

14. The method of claim 13, **characterised in that** the lubricant pockets (13) are produced by a die, the die having a surface being complementary to the underhead bearing surface (12) of the screw (2) including the lubricant pockets (13).

## Revendications

1. Vis (2) ayant une tête (5) avec une surface d'appui de la tête (12), **caractérisée en ce que** des poches de lubrifiant (13), dans lesquelles un lubrifiant est introduit, sont agencées dans une répartition irrégulière au moins dans une partie de la surface d'appui de la tête (12) et sont réalisées de façon non traversante dans la direction périphérique de la surface d'appui de la tête (12).

2. Vis (2) selon la revendication 1, **caractérisée en ce que** les poches de lubrifiant (13) sont réalisées de façon fermées sur le bord dans leur section.

3. Vis (2) selon au moins l'une des revendications précédentes, **caractérisée en ce que** les poches de lubrifiant (13) possèdent un diamètre moyen qui correspond au maximum à environ 20 % de la largeur radiale de la surface d'appui de la tête (12).

4. Vis (2) selon au moins l'une des revendications précédentes, **caractérisée en ce que** les poches de lubrifiant (13) possèdent un diamètre moyen compris entre environ 50 et 500 µm, et en particulier entre environ 100 et 300 µm.

5. Vis (2) selon au moins l'une des revendications précédentes, **caractérisée en ce que** la surface d'appui de la tête (12) possède une profondeur de rugosité moyenne Rz comprise entre environ 10 et 100 µm, et en particulier entre environ 15 et 50 µm, aux fins de la formation des poches de lubrifiant (13).

6. Vis (2) selon au moins l'une des revendications précédentes, **caractérisée en ce que** la surface d'appui de la tête (12) présente des zones en relief et des zones en enfoncement formant les poches de lubrifiant (13), étant entendu que les zones en relief sont réalisées de façon arrondie et possèdent en particulier un diamètre moyen compris entre environ 50 et 500 µm, et en particulier entre environ 100 et 300 µm.

7. Vis (2) selon au moins l'une des revendications précédentes, **caractérisée en ce que** les poches de lubrifiant (13) sont seulement agencées dans une partie de la surface d'appui de la tête (12), en particulier une partie extérieure dans le sens radial (19).

8. Vis (2) selon au moins l'une des revendications précédentes, **caractérisée en ce que** les poches de lubrifiant (13) sont fabriquées par formage à froid.

9. Rondelle (15) destinée à l'utilisation en combinaison avec une vis (2) ayant une tête (5) avec une surface d'appui de la tête (12), **caractérisée en ce que** des poches de lubrifiant (13), dans lesquelles un lubrifiant est introduit, sont agencées dans une répartition irrégulière au moins dans une partie de la première surface (16) de la rondelle (15) dirigée vers la surface d'appui de la tête (12) et sont réalisées de façon non traversante dans la direction périphérique de la première surface (16).

10. Rondelle (15) selon la revendication 9, **caractérisée en ce que** les poches de lubrifiant (13) sont réalisées de la manière définie dans au moins l'une des revendications précédentes, étant entendu que la surface d'appui de la tête (12) qui y est mentionnée correspond à la première surface (16) de la rondelle (15).

11. Raccord vissé (1), comprenant:
un élément de construction (3) ayant une surface (14) et un alésage (9),
une vis (2) ayant une tête (5) avec une surface d'appui de la tête (12), étant entendu que la vis (2) s'étend à travers l'alésage (9) de l'élément de construction (3),
une rondelle (15) ayant une première surface (16) et une deuxième surface (17) située en opposition, étant entendu que la rondelle (15) est agencée entre la surface d'appui de la tête (12) de la vis (2) et la surface (14) de l'élément de construction (3), étant entendu que la première surface (16) de la rondelle (15) est agencée en étant dirigée vers la surface l'appui de la tête (12) de la vis (2) et la deuxième surface (17) de la rondelle (15) vers la surface (14) de l'élément de construction (3), **caractérisé en ce que**
des poches de lubrifiant (13), dans lesquelles un lubrifiant est introduit, sont agencées dans une répartition irrégulière au moins dans une partie de la surface d'appui de la tête (12) de la vis (2) et/ou au moins dans une partie de la première surface (16) de la rondelle (15) dirigée vers la surface d'appui de la tête (12) et sont réalisées de façon non traversante dans la direction périphérique de la surface d'appui de la tête (12) et/ou de la première surface (16).

12. Procédé de fabrication d'une vis (2) ayant une tête (5) avec une surface d'appui de la tête (12), en particulier selon au moins l'une des revendications 1 à 8, comprenant l'étape consistant à:
former des poches de lubrifiant (13), dans lesquelles un lubrifiant est introduit, au moins dans une partie de la surface d'appui de la tête (12) de la vis (2) de telle sorte que les poches de lubrifiant (13) sont agencées dans une répartition irrégulière dans la surface d'appui de la tête (12) et sont réalisées de façon non traversante dans la direction périphérique de la surface d'appui de la tête (12).

13. Procédé selon la revendication 12, **caractérisé en ce que** les poches de lubrifiant (13) sont fabriquées par formage à froid.

14. Procédé selon la revendication 13, **caractérisé en ce que** les poches de lubrifiant (13) sont fabriquées au moyen d'une matrice, étant entendu que la matrice possède une surface qui est complémentaire à la surface d'appui de la tête (12) de la vis (2) comprenant les poches de lubrifiant (13).
